# FASCICULE DE BREVET EUROPEEN

(11) **EP 4 204 302 B1**
(45) Date de publication et mention de la délivrance du brevet: **02.04.2025**
(21) Numéro de dépôt: 21769769.7
(22) Date de dépôt: 17.08.2021
(51) Int. Cl.: B64C 11/06, B64C 11/24, B64C 11/26, B64C 11/18, B64C 11/14, B64D 27/00

(54) **HELICE NON CARENEE A PALES A CALAGE VARIABLE COMPORTANT DES PLATE-FORMES A PERTUBATIONS REDUITES**
NICHT UMMANTELTER PROPELLER MIT VERSTELLSCHAUFELN MIT VERRINGERTEN STÖRUNGSPLATTFORMEN
NON-DUCTED PROPELLER HAVING VARIABLE-PITCH BLADES COMPRISING REDUCED DISTURBANCE PLATFORMS

(30) Priorité: 27.08.2020 FR 2008755
(43) Date de publication de la demande: 05.07.2023
(73) Titulaire: SAFRAN AIRCRAFT ENGINES, 75015 Paris (FR)
(72) Inventeur: JOUDON, Vincent, 77550 MOISSY-CRAMAYEL (FR); COURTIER, Vivien Mickaël, 77550 MOISSY-CRAMAYEL (FR); POSTEC, Clément Pierre, 77550 MOISSY-CRAMAYEL (FR)
(74) Mandataire: Gevers & Orès
(86) Numéro de dépôt international: PCT/FR2021/051471
(87) Numéro de publication internationale: WO 2022/043631

(56) Documents cités:
- EP-A1- 2 796 367
- FR-A1- 2 375 033
- US-B1- 6 213 719

## Description

### Domaine technique de l'invention

Le domaine de la présente invention est celui des hélices non carénées à pales à calage variable, et en particulier celles destinées à la propulsion des aéronefs.

### Arrière-plan technique

Les hélices à pales à calage variable représentent un domaine particulier des hélices, que celles-ci soient destinées à la propulsion des aéronefs ou à d'autres applications aérodynamiques, telles que les hélices d'éoliennes.

Une hélice à pales à calage variable comporte pour l'essentiel un moyeu d'orientation axiale muni de logements recevant des aubes qui sont montées mobiles en pivotement autour d'axes radiaux dans ces logements. Chaque aube comporte un pied à partir duquel s'étend une pale. Le pied est monté dans un logement correspondant du moyeu par l'intermédiaire d'un palier orienté selon l'axe radial, qui est interposé entre une structure interne du moyeu et le pied de l'aube afin d'en permettre le pivotement, comme divulgué de manière classique dans les documents US-6.213.719-B1 et FR-2.375.033-A1.

Le moyeu comporte généralement un carter externe qui constitue un carénage aérodynamique du moyeu. Dans ce carter sont pratiqués des ouvertures par lesquelles les logements débouchent, et par lesquelles les pieds des aubes sont introduits dans le moyeu.

Il existe donc des discontinuités aérodynamiques au niveau de ce carénage au voisinage des ouvertures, d'une part entre les pieds des aubes et les bords des ouvertures, et d'autre part entre les pieds des aubes et les pales des aubes. Ces discontinuités aérodynamiques provoquent des turbulences autour de la base des pales, qui détériorent le rendement aérodynamique global de l'hélice.

Il importe donc de proposer pour chaque pale une plate-forme aérodynamique permettant d'assurer une continuité d'une part entre la plate-forme et le pourtour de l'ouverture associée, et d'autre part entre la base de la pale et la plate-forme, afin de limiter toute turbulence.

Dans le cas des hélices destinées à la propulsion des aéronefs, les contraintes environnementales et économiques amènent de plus en plus les motoristes à augmenter les taux de dilution des turbomachines de manière à diminuer la signature acoustique de la soufflante et à réduire la consommation en carburant. En conséquence, le diamètre de la soufflante ne cesse de croître, avec pour corollaire une augmentation des dimensions des aubes de la soufflante. Or, l'augmentation de masse des aubes qui en découle implique indirectement une augmentation de la masse du moyeu qui doit être à même de retenir des efforts centrifuges plus importants. Pour traiter cette problématique, deux technologies classiques permettent de diminuer la masse des pales de rotor. La première consiste à réaliser des pales creuses et la seconde consiste à utiliser des matériaux composites à matrice organique, aussi appelés CMO.

L'utilisation combinée de ces deux technologies permet un gain de masse très significatif de l'hélice. C'est notamment le cas pour les pales d'hélice de turbomachine de type « open rotor » à soufflante non carénée dont la longueur n'est pas limitée par la présence d'un carénage entourant l'hélice.

Dans le cas d'une turbomachine, le contrôle des étanchéités est essentiel dans la veine aérodynamique car il influence directement les performances du moteur. C'est pourquoi on cherche d'une part à supprimer les fuites d'air entre la pale et la plate-forme, et d'autre part les turbulences entre la plate-forme et le pourtour de l'ouverture.

Il est ainsi connu, pour les hélices à calage variable, de rapporter deux demi-plate-formes sous l'aube de soufflante et de les visser à un pivot qui permet de recevoir un pied de pale en forme de queue d'aronde selon un système d'attache brochée.

Cette solution, en proposant une plate-forme qui s'étend jusqu'au pourtour de l'ouverture permet de limiter les fuites d'air à ce niveau mais il existe néanmoins d'une part un jeu entre les deux demi-plate-formes et d'autre part un jeu entre la pale, qui ne s'étend pas radialement jusqu'à la plate-forme, et la plate-forme ainsi assemblée. Ces jeux sont généralement comblés de manière quasi-artisanale avec des joints élastomères.

D'autres solutions sont connues pour d'autres types d'aubes comportant des pieds de pales différents.

Le document EP-2.796.367-A1 décrit une aube monobloc dont le pied est emprisonné entre deux joues munies de demiplateformes jointives autour du pied.

Le document US-4.045.149A décrit et représente une aube de rotor munie d'une pale, d'une plate-forme et d'un pied, dont la pale est montée pivotante dans son pied autour d'un axe sensiblement parallèle à celui du moyeu de l'hélice, de manière à permettre un mouvement latéral de la pale par rapport à celui-ci en cas de choc avec un corps étranger. La plate-forme est réalisée en deux parties et elle comporte deux plates-formes mobiles l'une par rapport à l'autre, une première plate-forme étant attachée à la pale et étant susceptible d'accompagner ses mouvements en coulissant sous une deuxième plate-forme, la pale étant mobile dans une lumière de la deuxième plate-forme qui est pour sa part attachée au pied et qui s'étend jusqu'au bord de l'ouverture du moyeu.

Cette dernière conception laisse donc subsister des fuites d'air importantes entre la pale et la plate-forme, rendues nécessaires par l'articulation de la pale. En outre, la pale ne se prolonge pas jusqu'à la première plate-forme, de sorte qu'il existe un jeu un bord inférieur de la pale et les deux plates-formes, qui risque, là encore, de provoquer des perturbations aérodynamiques.

Pour supprimer les jeux entre la pale et la plate-forme, on a proposé dans le document WO2013/104852 une aube comportant une pale obtenue à partir d'une préforme fibreuse, et intégrant la plate-forme à la pale en déliant une partie de la préforme fibreuse qui structure la pale. Cependant, cette solution est d'une part complexe dans la maitrise du procédé de fabrication et d'autre part les géométries des plate-formes ainsi réalisables sont limitées par la géométrie de la préforme qui compose la pale. En particulier, le passage de la pale à la plate-forme génère du décadrage, c'est à dire une orientation de la chaîne et de la trame non orthogonale. De plus, l'épaisseur de la plate-forme est limitée par l'épaisseur de la peau composite de pale.

Le document FR-3.048.228-A1 résout partiellement ce problème en proposant une aube dans laquelle la base de la pale est emprisonnée dans une plate-forme qui présente la forme d'une portion de sphère et qui s'étend jusqu'au bord de l'ouverture du logement correspondant. La forme en portion de sphère de la plate-forme permet de s'adapter à un moyeu dont le carter externe est de forme tronconique sans créer de perturbations aérodynamiques quelle que soit la position angulaire de l'aube. Toutefois, si, dans ce document il n'existe pas de jeu, ni entre la pale et la plate-forme, ni entre la plate-forme et le bord de l'ouverture, la forme en forme de portion de sphère de la plate-forme crée nécessairement d'importantes perturbations aérodynamiques en aval de l'aube.

Enfin, ce document est silencieux quant à la méthode de réalisation de cette plate-forme, qu'il s'agisse du montage de la plate-forme sur l'aube ou de sa méthode de fabrication.

### Résumé de l'invention

Il existe donc un réel besoin pour une aube équipée d'une plate-forme permettant de limiter les perturbations aérodynamiques entre la plate-forme et l'ouverture du logement et surtout entre la pale et la plate-forme, tout en étant d'une conception simple et efficace.

Dans ce but, l'invention propose une hélice selon la revendication 1.

Selon d'autres caractéristiques de l'hélice :
- la plate-forme est rapportée autour du bord inférieur libre sur une surface externe de la peau,
- la plate-forme est rapportée sous ledit bord inférieur libre de la peau,
- la peau est en fibres tissées noyées dans une résine et la plate-forme est collée au bord inférieur libre de la peau et noyée dans la résine avec la pale,
- l'hélice est une hélice de propulseur aéronautique et comporte en outre un longeron relié au pied et s'étendant le long de l'axe à l'intérieur de la pale, une forme en mousse assurant l'interface entre le longeron et la peau en fibres tissées, et la plate-forme comporte au moins une partie pénétrant dans ladite forme en mousse.

L'hélice est une hélice de propulseur aéronautique et elle comporte :
- une attache de géométrie cylindrique, d'axe radial, émergeant du bord inférieur de la pale et apte à maintenir ladite pale sur le moyeu associé, ladite attache comportant une partie en forme de tulipe dont une base fait saillie hors de la pale, et le pied de la pale, qui prolonge la base, et qui est apte à être reçu en pivotement dans le logement associé du moyeu,
- un longeron tubulaire creux, s'étendant suivant une partie de la pale, dont une extrémité est reçue sur la partie en forme de tulipe et y est fixée par un bobinage,
et la plate-forme est fixée à la base de la partie en forme de tulipe, un premier joint d'étanchéité élastomère étant agencé entre la pale et la plate-forme.
- la plate-forme est fixée à la base de la partie en forme de tulipe par l'intermédiaire d'au moins une patte qui s'étend entre la base de la partie en forme de tulipe et une face inférieure de la plate-forme.
- l'au moins une patte est fixée à la base de la partie en forme de tulipe par au moins une vis et à la face inférieure de la plate-forme par au moins une vis.
- la plate-forme est constituée de deux demi-plate-formes jointives selon un plan passant par l'axe de l'aube, qui sont rapportées autour du bord inférieur libre de la pale et fixées à la base de la partie en forme de tulipe, un second joint d'étanchéité élastomère étant agencé entre les deux demi-plate-formes.

L'invention concerne aussi un premier procédé de fabrication d'une aube d'hélice de propulseur aéronautique du type décrit précédemment, caractérisé en ce qu'il comporte au moins une première étape au cours de laquelle on réalise une ébauche d'aube comportant une peau en fibres tissées, une deuxième étape au cours de laquelle on dépose l'aube dans un moule d'injection, une troisième étape au cours de laquelle on moule la plate-forme avec la pale par un procédé de transfert de résine RTM, et une quatrième étape au cours de laquelle on colle la plate-forme au bord inférieur libre de la peau.

L'invention concerne enfin un second procédé de fabrication en variante d'une aube d'hélice de propulseur aéronautique du type décrit précédemment, caractérisé en ce qu'il comporte au moins une première étape au cours de laquelle on réalise une ébauche d'aube comportant une peau en fibres tissées, une deuxième étape au cours de laquelle on colle la plate-forme au bord inférieur libre de la peau, une troisième étape au cours de laquelle on dépose l'aube dans un moule d'injection, et une quatrième étape au cours de laquelle on moule la plate-forme avec la pale par un procédé de transfert de résine RTM.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue en perspective d'une turbomachine de type « open rotor » à doublet d'hélices non carénées ;
[Fig. 2] La figure 2 est une vue en coupe de détail, par un plan contenant la direction axiale de la turbomachine de la figure 1, d'une hélice selon l'art antérieur de la technique ;
[Fig. 3] La figure 3 est une vue détail de la figure 2 ;
[Fig. 4] La figure 4 est une vue en coupe de détail, par un plan perpendiculaire à la direction axiale de la turbomachine de la figure 1, de l'hélice selon l'art antérieur de la technique ;
[Fig. 5] La figure 5 est une vue en coupe par le plan 5-5 des figures 2 et 4, de l'hélice selon l'art antérieur de la technique ;
[Fig. 6] La figure 6 est une vue en coupe de détail, par un plan contenant la direction axiale de la turbomachine de la figure 1, d'une hélice selon un premier mode de réalisation de l'invention ;
[Fig. 7] La figure 7 est une vue détail de la figure 6 ;
[Fig. 8] La figure 8 est une vue en coupe de détail, par un plan perpendiculaire à la direction axiale de la turbomachine de la figure 1, de l'hélice selon le premier mode de réalisation de l'invention ;
[Fig. 9] La figure 9 est une vue en coupe par le plan 9-9 des figures 6 et 8, de l'hélice selon le premier mode de réalisation de l'invention ;
[Fig. 10] La figure 8 est une vue en coupe de détail, par un plan contenant la direction axiale de la turbomachine de la figure 1, d'une hélice selon un deuxième mode de réalisation de l'invention ;
[Fig. 11] La figure 11 est une vue détail de la figure 10 ;
[Fig. 12] La figure 12 est une vue en coupe de détail, par un plan perpendiculaire à la direction axiale de la turbomachine de la figure 1, de l'hélice selon le deuxième mode de réalisation de l'invention ;
[Fig. 13] La figure 13 est une vue en coupe par le plan 13-13 des figures 10 et 12, de l'hélice selon le deuxième mode de réalisation de l'invention ;
[Fig. 14] La figure 14 est une vue en coupe de détail, par un plan contenant la direction axiale de la turbomachine de la figure 1, d'une hélice selon un troisième mode de réalisation de l'invention ;
[Fig. 15] La figure 15 est une vue détail de la figure 14 ;
[Fig. 16] La figure 16 est une vue en coupe de détail, par un plan perpendiculaire à la direction axiale de la turbomachine de la figure 1, de l'hélice selon le troisième mode de réalisation de l'invention ;
[Fig. 17] La figure 17 est une vue en coupe par le plan 17-17 des figures 14 et 16, de l'hélice selon le troisième mode de réalisation de l'invention ;
[Fig. 18] La figure 18 est un digramme-bloc illustrant les étapes de fabrication d'une aube de turbomachine selon le premier mode de réalisation de l'invention.

### Description détaillée de l'invention

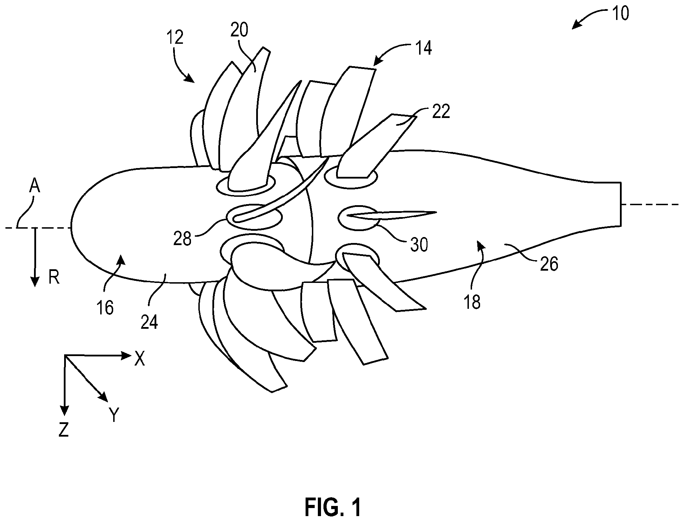

On a représenté à la figure 1 une turbomachine 10 d'aéronef de type « open rotor » comportant deux hélices contrarotatives 12,14 d'axe A. Chaque hélice 12,14 comporte un moyeu associé 16,18 muni de logements dans lesquels sont montées pivotantes des aubes respectives 20, 22 orientées sensiblement suivant des directions radiales R. Chaque moyeu 16,18 comporte un carter externe 24, 26 constituant un carénage aérodynamique dans lequel les logements débouchent par l'intermédiaire d'ouvertures 28, 30 dans lesquels les aubes 20, 22 sont montées.

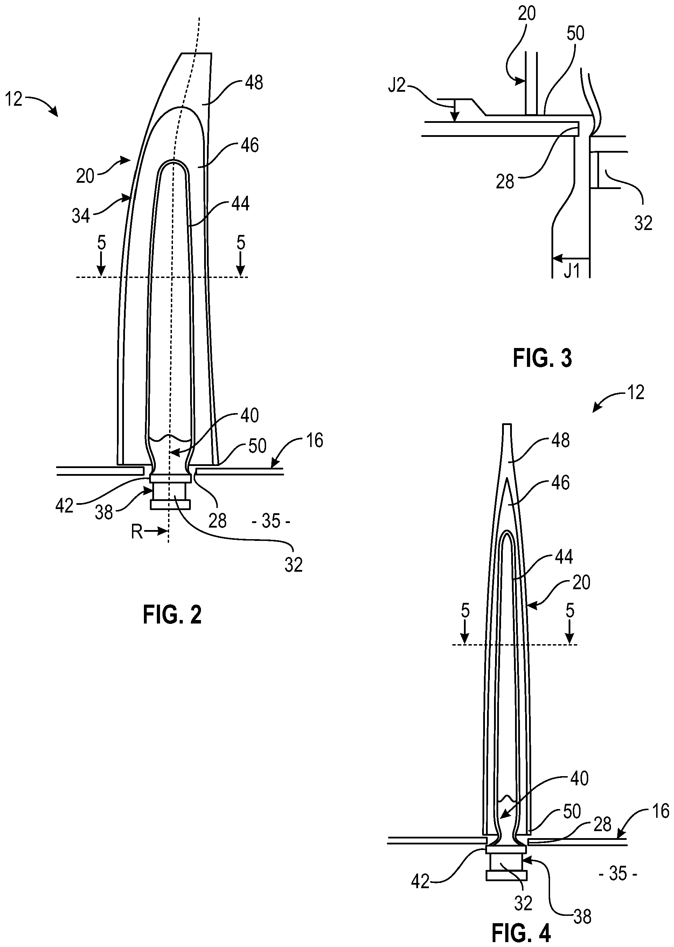

Les figures 2 à 5 représentent un montage conventionnel d'une aube 20 dans le moyeu 16 d'une hélice 12.

Conventionnellement, une aube 20 comporte un pied 32 qui est configuré pour être monté en rotation autour d'un axe radial R dans le logement 35 de l'hélice 12. À partir de ce pied 32 s'étend une pale 34, d'orientation générale coaxiale à la direction radiale R.

De nombreux types d'aubes 20 existent, qu'il s'agisse d'aubes 20 métalliques ou d'aubes réalisées à partir de matériaux composites.

De manière non limitative de l'invention, l'aube 20 qui a été représentée sur les figures 2 à 5 est une aube en matériaux composites qui comporte une attache 38 de géométrie cylindrique, d'axe radial, émergeant d'un bord inférieur 50 de la pale 34, et qui est apte à maintenir la pale 34 sur le moyeu associé. Cette attache 38 se compose pour l'essentiel d'une partie 40 en forme de tulipe dont une base 42 fait saillie hors de la pale 34, et du pied 32 de l'aube, qui prolonge la base 42 et qui est apte à être reçu en pivotement dans le logement 35 associé du moyeu 16.

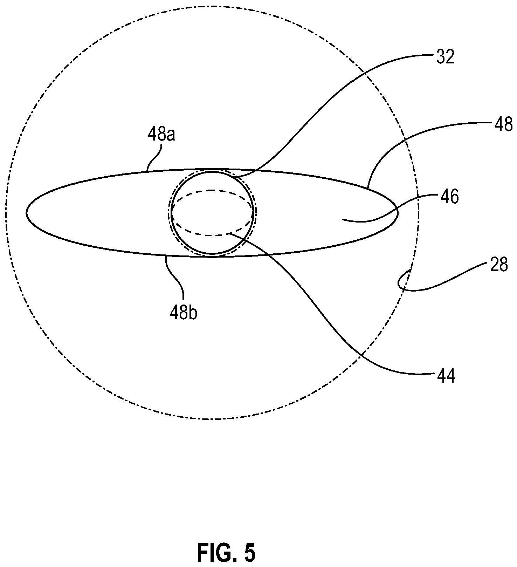

Un longeron 44 est relié au pied 32 et il s'étend le long de l'axe R à l'intérieur de la pale 34. Plus particulièrement, le longeron 44 est fixé à la partie 40 en forme de tulipe et il s'étend à l'intérieur de la pale 34 à partir de celle-ci. Selon un procédé de fabrication qui est bien connu de l'état la technique et qui ne sera pas décrit outre mesure, le longeron 44 est par exemple un longeron tubulaire creux, réalisé en fibres de carbone tressées, qui est enfilé sur la partie 40 en forme de tulipe et qui y est maintenu par un bobinage (non représenté) en fibres de verre. Le longeron 44 est recouvert d'une forme en mousse 46, qui est elle-même recouverte d'une peau 48 en fibres tissées, la forme en mousse 46 assurant l'interface entre le longeron 44 et la peau 48 en fibres tissées. La peau 48 définit une surface externe aérodynamique définissant un intrados 48a et un extrados 48b de la pale 34, comme représenté à la figure 5. Comme l'illustrent les figures 2 à 4, la peau 48 comporte en outre un bord inférieur libre 50 qui est tourné du côté du pied 32.

Lors de la fabrication de l'aube 20, l'attache 38 équipée du longeron tubulaire 44, de la forme en mousse 46, et de la peau 48 forme une préforme qui est placée dans un moule d'injection de résine puis qui est soumise à un procédé de transfert de résine RTM pour obtenir la pale 34 définitive.

Cette configuration n'est pas limitative de l'invention. L'invention trouve plus généralement à s'appliquer à toutes les aubes 20 comportant une pale 34 munie d'un bord inférieur libre 50. C'est par exemple également le cas des pales d'éoliennes en matériaux composites qui comportent des pales munies de bords inférieurs libres de forme sensiblement tubulaire à partir desquels des tirants de fixation font saillie, ces tirants étant destinés à être reçus dans les moyeux des éoliennes correspondantes.

Comme on peut le voir à la figure 3, dans cette configuration conventionnelle, il existe un jeu J1 important entre la pale 34 et le bord de l'ouverture 28, et un jeu J2 entre le bord inférieur 50 de la pale 34 et le moyeu 16. Ces jeux J1 et J2 favorisent l'apparition de perturbations aérodynamiques qui nuisent au rendement de l'hélice et en dégradent les performances.

Pour remédier à ces inconvénients, on a proposé une aube équipée d'une plate-forme s'étendant perpendiculairement à la direction radiale R entre la pale et le bord de l'ouverture 28, cette plate-forme étant en forme de portion de sphère et emprisonnant l'extrémité inférieure de la pale. La forme sphérique de la plate-forme permet de s'adapter à toutes les positions de pivotement de la pale. Toutefois, cette plate-forme est également volumineuse et elle induit des perturbations aérodynamiques, notamment en aval de l'aube.

L'invention vise à remédier à ces inconvénients en proposant une plate-forme apte à s'étendre perpendiculairement à la direction radiale R entre la pale et le bord de l'ouverture 28 et n'induisant pas de perturbations aérodynamiques supplémentaires.

À cet effet l'invention tire parti d'une configuration particulière d'une aube 20 comportant une pale 34 munie d'un bord libre 50. Ce bord 50 est utilisé pour assurer la fixation d'une plate-forme permettant sensiblement d'annuler les jeux J1 et J2 précédemment évoqués.

Dans ce but, l'invention propose une hélice 12 du type décrit précédemment, caractérisée en ce qu'une plate-forme 52 est rapportée au bord inférieur libre 50 de la peau 48.

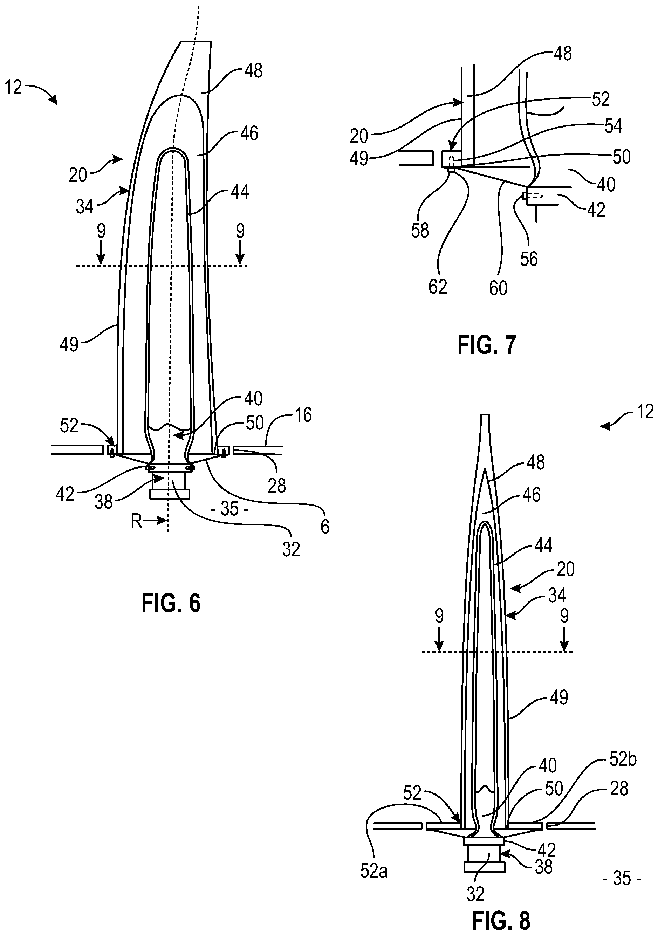

Selon un premier mode de réalisation de l'invention qui a été représenté aux figures 6 à 9, la plate-forme 52 peut être rapportée autour du bord inférieur libre 50 sur une surface externe 49 de la peau 48.

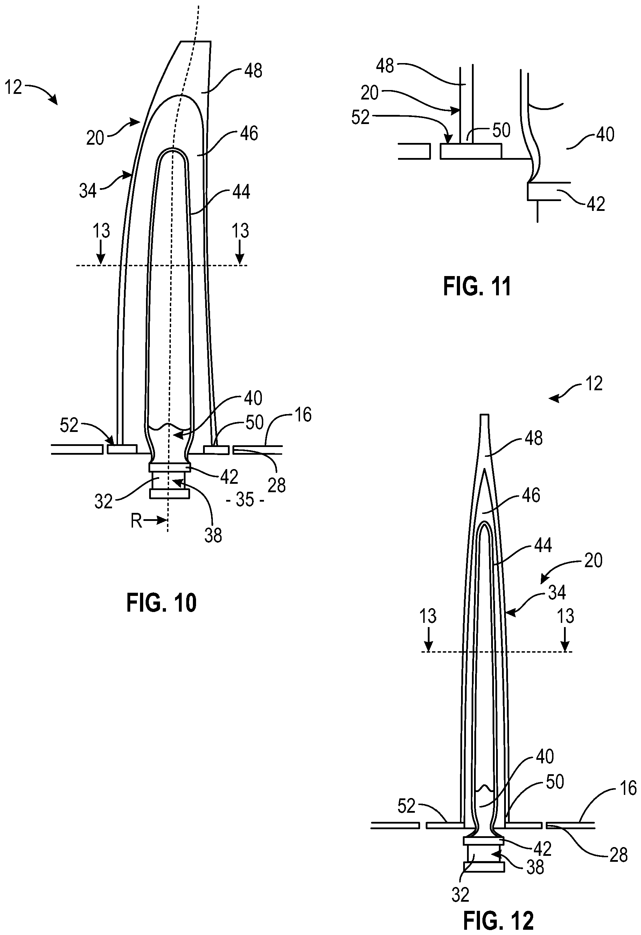

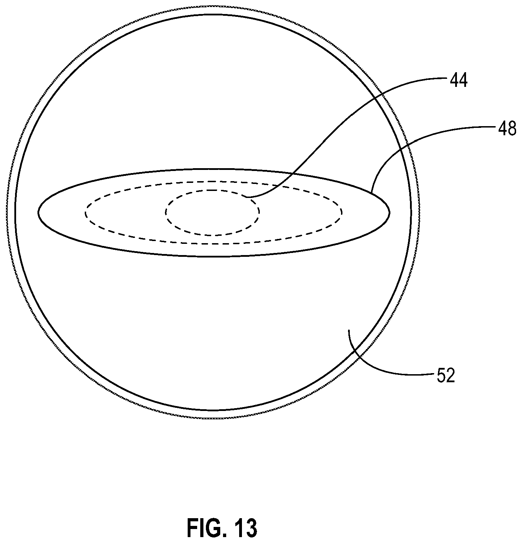

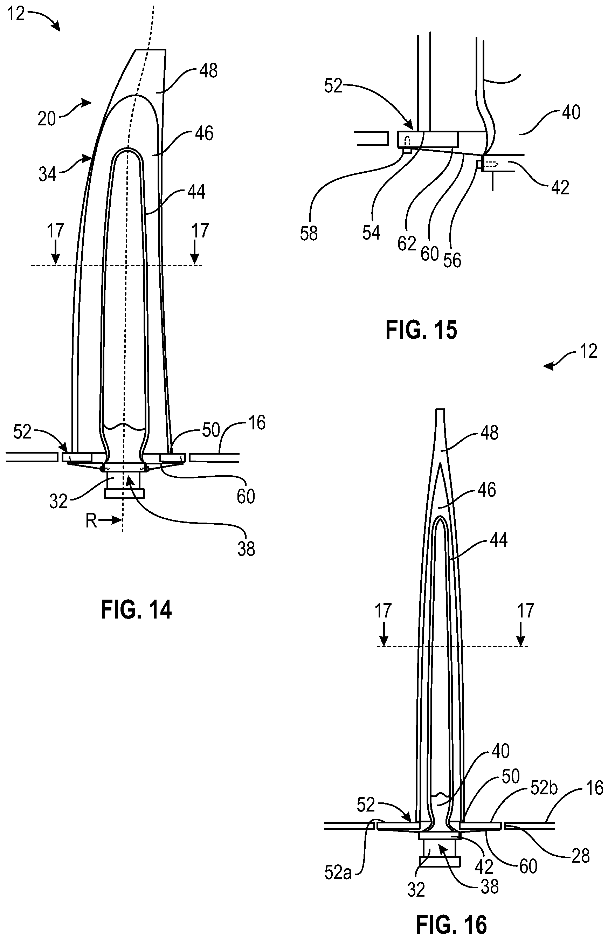

Selon des deuxième et troisième modes de réalisation de l'invention qui ont été représentés aux figures 10 à 13 et aux figures 14 à 17 respectivement, la plate-forme 52 peut être rapportée sous le bord inférieur libre 50 de la peau 48.

Plusieurs configurations sont envisageables, d'une manière générale, en fonction du matériau de la pale 34. Il est ainsi possible d'envisager différents types de liaisons entre la plate-forme 52 et l'aube 20, en fonction du matériau de la pale 34.

Par exemple, dans le cas d'une pale 34 métallique, le plate-forme 52 serait de préférence métallique et elle serait rapportée au bord inférieur libre 50 de la peau 48 par soudage.

La manière dont la plate-forme 52 est fixée à la peau 48 dépend aussi de la surface de la peau 48 à laquelle elle est rapportée et du matériau de cette peau 48.

Lorsque la peau 48 est en fibres tissées noyées dans une résine, c'est-à-dire lorsque l'aube 20 est obtenue par un procédé de moulage à transfert de résine RTM, la plate-forme 52 peut, selon un premier procédé de fabrication, être simplement collée au bord inférieur libre 50 de la peau 48 après polymérisation de la résine dont est imprégnée la pale 34.

En variante, toujours lorsque la peau 48 est en fibres tissées noyées dans une résine et que l'aube 20 est obtenue par un procédé de moulage à transfert de résine RTM, la plate-forme 52 peut, selon un second procédé de fabrication, être collée au bord inférieur libre 50 de la peau 48 préalablement à la polymérisation de la peau 48, c'est-à-dire lorsque la peau 48 n'est encore qu'au stade de préforme sur l'aube 20 semi-finie. La plate-forme 52 peut ensuite être noyée dans la résine avec la pale 34 lors de la fabrication de l'aube 20, et donc être ainsi surmoulée avec celle-ci.

La pale 34 peut comporter un longeron 44 s'étendant le long de l'axe R à l'intérieur de la pale 34, ce longeron 44 étant recouvert d'une forme en mousse 46 assurant l'interface entre le longeron 44 et la peau 48 en fibres tissées. Dans la configuration associée au second procédé de fabrication, la plate-forme 52 pourrait alors comporter au moins une partie (non représentée) pénétrant dans la forme en mousse 46.

Cette configuration est particulièrement avantageuse car la résine, introduite dans la pale et dans la mousse par le procédé de moulage RTM permet, après sa polymérisation, d'emprisonner fermement cette partie dans la mousse, ce qui permet d'accroître la fiabilité de la fixation de la plate-forme 52.

Ces premier et deuxième procédés de fabrication sont ainsi plus particulièrement associés au deuxième mode de réalisation de l'invention qui a été représenté sur les figures 10 à 13.

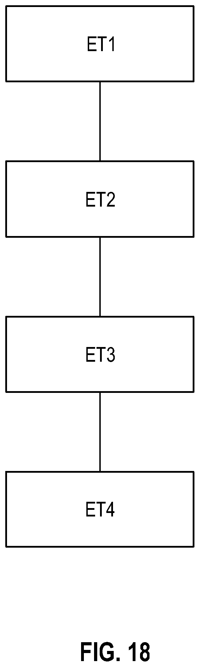

Selon le premier procédé de fabrication, comme l'illustre toujours la figure 18, l'aube 34 peut être fabriquée selon une première étape ET1 au cours de laquelle on réalise une ébauche d'aube 20 comportant une peau 48 en fibres tissées selon la méthode précédemment décrite en référence à l'état de la technique.

Puis, au cours d'un deuxième étape ET2, on dépose l'aube 20 dans un moule d'injection (non représenté), et au cours d'une troisième étape ET3 on moule la plate-forme 52 avec la pale 34 par un procédé de transfert de résine RTM bien connu de l'état de la technique. Enfin au cours d'un quatrième étape ET4, on se munit d'une plate-forme rigide 52. Cette plate-forme peut être métallique ou en un matériau composite déjà rigidifié par une injection préalable de résine. Au cours de cette quatrième étape ET4, on colle la plate-forme 52 au bord inférieur libre 50 de la peau 48.

Selon le second procédé de fabrication, comme l'illustre toujours la figure 18, l'aube 34 peut être fabriquée selon une première étape ET1 au cours de laquelle on réalise une ébauche d'aube 34 comportant une peau 48 en fibres tissées selon la méthode précédemment décrite en référence à l'état de la technique.

Puis au cours d'une deuxième étape ET2, on se munit d'une plate-forme rigide 52. Cette plate-forme peut être métallique ou en un matériau composite déjà rigidifié par une injection préalable de résine. Au cours de cette deuxième étape ET2, on colle la plate-forme 52 au bord inférieur libre 50 de la peau 48, encore au stade de préforme. Puis au cours d'une troisième étape ET3, on dépose l'aube 20 dans un moule d'injection (non représenté), puis, au cours d'une quatrième étape ET4, on moule la plate-forme 52 avec la pale 34 par le procédé de transfert de résine RTM bien connu de l'état de la technique.

Selon les premier et troisième modes de réalisation de l'invention qui ont été représentés aux figures 6 à 9 et 14 à 17 respectivement, la plate-forme 52 est fixée à la base 42 de la partie 40 en forme de tulipe.

Cette conception peut être ou non associée avec un collage de la plate-forme 52 au bord inférieur de la pale 34. Toutefois, elle permet aussi d'assurer une fixation de la plate-forme 52 à l'aube 20 sans collage selon un troisième procédé de fabrication. En ce cas, un premier joint d'étanchéité élastomère, dont l'emplacement est représenté par la référence 54, est agencé entre la pale 34 et la plate-forme 52.

Plus particulièrement, comme l'illustrent les figures 7 et 15, la plate-forme 52 est fixée à la base 42 de la partie 40 en forme de tulipe par l'intermédiaire d'au moins une patte 60 qui s'étend entre la base 42 de la partie 40 en forme de tulipe et une face inférieure 62 de la plate-forme 52. La patte 60 est de préférence fixée à la base 42 de la partie 40 en forme de tulipe par au moins une vis 56 et à la face inférieure 62 de la plate-forme 52 par au moins une vis 58.

La patte 60 peut prendre diverses formes. Elle peut être sensiblement rectiligne et la plate-forme 52 peut être reliée à la base 42 par une pluralité de pattes 60 réparties angulairement de manière régulière autour de la base 42 de la partie 40 en forme de tulipe. La patte 60 peut aussi présenter une forme de coupelle ou de secteur de coupelle tronconique s'étendant suivant un secteur angulaire déterminé autour de l'axe R de l'aube 20, cet angle pouvant aller jusqu'à 360 degrés. En ce cas, la patte 60 est fixée à la base 42 de la partie 40 en forme de tulipe par une pluralité de vis 56 et à la face inférieure 62 de la plate-forme 52 par une pluralité de vis 58.

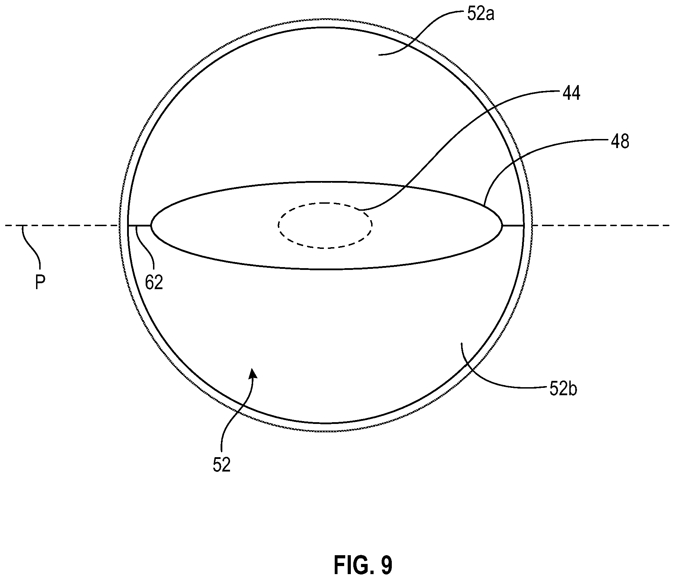

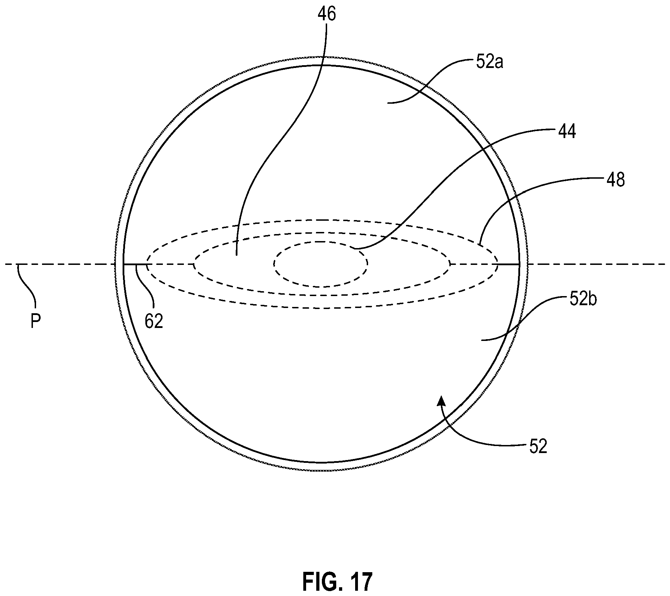

De préférence, dans les premier et troisième modes de réalisation de l'invention, c'est-à-dire lorsque la plate-forme 52 est fixée à la base 42 de la partie 40 en forme de tulipe, celle-ci est constituée de deux demi-plate-formes 52a et 52b, qui ont été représentées aux figures 9 et 17 comme jointives selon un plan P passant par l'axe R de l'aube 20, et qui sont rapportées autour du bord inférieur libre 50 de la pale 34. Les deux demi plate-formes 52a et 52b sont chacune fixées à la base 42 de la partie 40 en forme de tulipe et un second joint d'étanchéité élastomère, dont la position est représentée par la référence 62, est alors agencé entre les deux demi-plate-formes 52a, 52b pour assurer l'étanchéité.

L'invention permet donc de proposer une hélice 12 dont les fuites aérodynamiques entre l'aube 20 et les ouvertures 28 du moyeu 16 sont minimisées, et dont les perturbations aérodynamiques entre les pales 34 et les plate-formes 52 sont également minimisées. Le rendement d'une telle hélice 12 se trouve donc considérablement accru.

## Revendications

1. Hélice (12) non carénée à pales à calage variable de propulseur aéronautique ou d'éolienne, comportant un moyeu (16) muni de logements (35) recevant des aubes en pivotement autour d'axes radiaux, et un carter externe (24) constituant un carénage aérodynamique du moyeu (16), ledit carter externe (24) comportant des ouvertures circulaires (28) par lesquelles lesdits logements (35) débouchent et permettant l'introduction des aubes dans le moyeu, chaque aube (20) comportant :
- un pied (32) configuré pour être monté en rotation autour d'un axe radial (R) dans le logement (35) associé,
- une pale (34) d'orientation générale radiale, et
- une plate-forme (52) présentant sensiblement la forme d'un disque s'étendant, transversalement par rapport à la direction radiale (R), à partir de ladite pale (34) jusqu'à un bord de l'ouverture circulaire (28) du carter (24) associée, la pale (34) comportant au moins une peau (48) comprenant une surface externe aérodynamique définissant un intrados (48a) et un extrados (48b) de la pale (34), ladite peau (48) comprenant un bord inférieur libre (50) tourné du côté dudit pied (32),
caractérisée en que la plate-forme (52) est rapportée au bord inférieur libre (50) de la peau (48).

2. Hélice (12) selon la revendication précédente, **caractérisée en ce que** la plate-forme (52) est rapportée autour du bord inférieur libre sur une surface externe de la peau.

3. Hélice (12) selon la revendication 1, **caractérisée en ce que** la plate-forme (52) est rapportée sous ledit bord inférieur libre (50) de la peau (48).

4. Hélice (12) selon l'une des revendications précédentes, **caractérisée en ce que** la peau (48) est en fibres tissées noyées dans une résine et **en ce que** la plate-forme (52) est collée au bord inférieur libre (50) de la peau (48)

5. Hélice selon la revendication précédente, **caractérisée en ce que** la plate-forme est noyée dans la résine avec la pale (34).

6. Hélice (12) selon l'une des revendications 4 ou 5, caractérisée en en ce qu'elle est une hélice (12) de propulseur aéronautique et comporte en outre :
- un longeron (44) relié au pied (32) et s'étendant le long de l'axe (R) à l'intérieur de la pale (34), et
- une forme en mousse (46) assurant l'interface entre le longeron (44) et la peau (48) en fibres tissées,
et en ce que la plate-forme (52) comporte au moins une partie pénétrant dans ladite forme en mousse (46).

7. Hélice (12) selon l'une des revendications 1 à 5, **caractérisée en ce qu'**elle est une hélice (12) de propulseur aéronautique et comporte :
- une attache (38) de géométrie cylindrique, d'axe radial (R), émergeant du bord inférieur de la pale (34) et apte à maintenir ladite pale (34) sur le moyeu associé, ladite attache (38) comportant une partie (40) en forme de tulipe dont une base (42) fait saillie hors de la pale (34), et le pied (32) de la pale (34), qui prolonge la base (42), et qui est apte à être reçu en pivotement dans le logement (35) associé du moyeu (16),
- un longeron tubulaire creux (44), s'étendant suivant une partie de la pale (34), dont une extrémité est reçue sur la première partie (40) en forme de tulipe et y est fixée par un bobinage,
et **en ce que** la plate-forme (52) est fixée à la base (42) de la partie (40) en forme de tulipe, un premier joint d'étanchéité élastomère étant agencé entre la pale (34) et la plate-forme (52).

8. Hélice (12) selon la revendication précédente, **caractérisée en ce que** la plate-forme (52) est fixée à la base (42) de la partie (40) en forme de tulipe par l'intermédiaire d'au moins une patte (60) qui s'étend entre la base (42) de la partie (40) en forme de tulipe et une face inférieure (62) de la plate-forme (52).

9. Hélice (12) selon la revendication précédente, **caractérisée en ce que** l'au moins une patte (60) est fixée à la base (42) de la partie (40) en forme de tulipe par au moins une vis (56) et à la face inférieure (62) de la plate-forme par au moins une vis (58).

10. Hélice (12) selon l'une des revendications 7 à 9, **caractérisée en ce que** la plate-forme (50) est constituée de deux demi-plate-formes jointives (52a, 52b) selon une plan (P) passant par l'axe (R) de l'aube (34), qui sont rapportées autour du bord inférieur libre (50) de la pale (34) et fixées à la base (42) de la partie (40) en forme de tulipe, un second joint d'étanchéité élastomère étant agencé entre les deux demi-plate-formes (52a, 52b).

11. Procédé de fabrication d'une aube (20) d'hélice (12) de propulseur aéronautique selon la revendication 4, **caractérisé en ce qu'**il comporte au moins une première étape (ET1) au cours de laquelle on réalise une ébauche d'aube (20) comportant une peau (48) en fibres tissées, une deuxième étape (ET2) au cours de laquelle on dépose l'aube (20) dans un moule d'injection, une troisième étape (ET3) au cours de laquelle on moule la plate-forme (52) avec la pale (34) par un procédé de transfert de résine RTM, et une quatrième étape (ET4) au cours de laquelle on colle la plate-forme (52) au bord inférieur libre (50) de la peau (48),

12. Procédé de fabrication d'une aube (20) d'hélice (12) de propulseur aéronautique selon la revendication 5, **caractérisé en ce qu'**il comporte au moins une première étape (ET1) au cours de laquelle on réalise une ébauche d'aube (20) comportant une peau (48) en fibres tissées, une deuxième étape (ET2) au cours de laquelle on colle la plate-forme (52) au bord inférieur libre (50) de la peau (48), une troisième étape (ET3) au cours de laquelle on dépose l'aube (20) dans un moule d'injection, et une quatrième étape (ET4) au cours de laquelle on moule la plate-forme (52) avec la pale (34) par un procédé de transfert de résine RTM.

## Patentansprüche

1. Nicht ummantelter Propeller (12) mit Blättern mit variabler Feststellposition eines Luftfahrzeug- oder Windkraftanlagenantriebs, umfassend eine Nabe (16), die mit Aufnahmen (35) ausgestattet ist, die Schaufeln schwenkend um radiale Achsen aufnehmen, und ein Außengehäuse (24), das eine aerodynamische Ummantelung der Nabe (16) darstellt, wobei das Außengehäuse (24) kreisförmige Öffnungen (28) umfasst, durch die die Aufnahmen (35) hindurchgehen und die den Einsatz der Schaufeln in die Nabe ermöglichen, wobei jede Schaufel (20) Folgendes umfasst:
- einen Fuß (32), der konfiguriert ist, um drehend um eine radiale Achse (R) in der zugehörigen Aufnahme (35) montiert zu werden,
- ein Blatt (34) mit allgemein radialer Ausrichtung, und
- eine Plattform (52), die im Wesentlichen die Form einer Scheibe aufweist, die sich in Bezug auf die radiale Richtung (R) ausgehend von dem Blatt (34) bis zu einem Rand der kreisförmigen Öffnung (28) des zugehörigen Gehäuses (24) quer erstreckt, wobei das Blatt (34) mindestens eine Schale (48) umfasst, die eine aerodynamische Außenfläche umfasst, die eine Innenseite (48a) und eine Außenseite (48b) des Blatts (34) definiert, wobei die Schale (48) einen freien unteren Rand (50) umfasst, der zum Fuß (32) hin gedreht ist, **dadurch gekennzeichnet, dass** die Plattform (52) am freien unteren Rand (50) der Schale (48) angebracht ist.

2. Propeller (12) nach dem vorstehenden Anspruch, **dadurch gekennzeichnet, dass** die Plattform (52) um den freien unteren Rand herum auf einer Außenfläche der Schale angebracht ist.

3. Propeller (12) nach Anspruch 1, **dadurch gekennzeichnet, dass** die Plattform (52) unter dem freien unteren Rand (50) der Schale (48) angebracht ist.

4. Propeller (12) nach einem der vorstehenden Ansprüche, **dadurch gekennzeichnet, dass** die Schale (48) aus in einem Harz eingebetteten gewebten Fasern besteht und dadurch, dass die Plattform (52) am freien unteren Rand (50) der Schale (48) geklebt ist.

5. Propeller nach dem vorstehenden Anspruch, **dadurch gekennzeichnet, dass** die Plattform mit dem Blatt (34) im Harz eingebettet ist.

6. Propeller (12) nach einem der Ansprüche 4 oder 5, **dadurch gekennzeichnet, dass** es sich um einen Propeller (12) eines Luftfahrzeugantriebs handelt und er weiter umfasst:
- einen Längsträger (44), der mit dem Fuß (32) verbunden ist und sich entlang der Achse (R) im Inneren des Blatts (34) erstreckt, und
- eine Form aus Schaumstoff (46), die die Grenzfläche zwischen dem Längsträger (44) und der Schale (48) aus gewebten Fasern gewährleistet,
und dadurch, dass die Plattform (52) mindestens einen Teil umfasst, der in die Form aus Schaumstoff (46) eindringt.

7. Propeller (12) nach einem der Ansprüche 1 bis 5, **dadurch gekennzeichnet, dass** es sich um einen Propeller (12) eines Luftfahrzeugantriebs ist handelt und er umfasst:
- ein Befestigungselement (38) mit zylindrischer Geometrie mit radialer Achse (R), das vom unteren Rand des Blatts (34) herausragt und dazu angepasst ist, das Blatt (34) auf der zugehörigen Nabe zu halten, wobei das Befestigungselement (38) einen Teil (40) in Tulpenform umfasst, bei dem eine Basis (42) aus dem Blatt (34) hervorsteht, und den Fuß (32) des Blatts (34), der die Basis (42) verlängert und der dazu angepasst ist, schwenkend in der zugehörigen Aufnahme (35) der Nabe (16) aufgenommen zu werden,
- einen hohlen rohrförmigen Längsträger (44), der sich entlang eines Teils des Blatts (34) erstreckt, bei dem ein Ende auf dem ersten Teil (40) in Tulpenform aufgenommen ist und durch eine Wicklung befestigt ist,
und dadurch, dass die Plattform (52) an der Basis (42) des Teils (40) in Tulpenform befestigt ist, wobei eine erste elastomere Dichtung zwischen dem Blatt (34) und der Plattform (52) eingerichtet ist.

8. Propeller (12) nach dem vorstehenden Anspruch, **dadurch gekennzeichnet, dass** die Plattform (52) mithilfe mindestens einer Lasche (60), die sich zwischen der Basis (42) und dem Teil (40) in Tulpenform und einer unteren Seite (62) der Plattform (52) erstreckt, an der Basis (42) des Teils (40) in Tulpenform befestigt ist.

9. Propeller nach dem vorstehenden Anspruch, **dadurch gekennzeichnet, dass** mindestens eine Lasche (60) durch mindestens eine Schraube (56) an der Basis (42) des Teils (40) in Tulpenform und durch mindestens eine Schraube (58) an der unteren Seite (62) der Plattform befestigt ist.

10. Propeller (12) nach einem der Ansprüche 7 bis 9, **dadurch gekennzeichnet, dass** die Plattform (50) aus zwei in einer Ebene (P), die durch die Achse (R) der Schaufel (34) verläuft, aneinandergesetzten Halbplattformen (52a, 52b) besteht, die um den freien unteren Rand (50) des Blatts (34) angebracht und an der Basis (42) des Teils (40) in Tulpenform befestigt sind, wobei eine zweite elastomere Dichtung zwischen den zwei Halbplattformen (52a, 52b) eingerichtet ist.

11. Verfahren zur Herstellung einer Schaufel (20) eines Propellers (12) eines Luftfahrzeugantriebs nach Anspruch 4, **dadurch gekennzeichnet, dass** es mindestens einen ersten Schritt (ET1) umfasst, bei dem ein Schaufelrohling (20) erstellt wird, der eine Schale (48) aus gewebten Fasern umfasst, einen zweiten Schritt (ET2), bei dem die Schaufel (20) in eine Spritzform gesetzt wird, einen dritten Schritt (ET3), bei dem die Plattform (52) mit dem Blatt (34) durch ein Harzübertragungsverfahren, RTM, gegossen wird, und einen vierten Schritt (ET4), bei dem die Plattform (52) an den freien unteren Rand (50) der Schale (48) geklebt wird.

12. Verfahren zur Herstellung einer Schaufel (20) eines Propellers (12) eines Luftfahrzeugantriebs nach Anspruch 5, **dadurch gekennzeichnet, dass** es mindestens einen ersten Schritt (ET1) umfasst, bei dem ein Schaufelrohling (20) erstellt wird, der eine Schale (48) aus gewebten Fasern umfasst, einen zweiten Schritt (ET2), bei dem die Plattform (52) an den freien unteren Rand (50) der Schale (48) geklebt wird, einen dritten Schritt (ET3), bei dem die Schaufel (20) in eine Spritzform gesetzt wird, und einen vierten Schritt (ET4), bei dem die Plattform (52) mit dem Blatt (34) durch ein Harzübertragungsverfahren, RTM, gegossen wird.

## Claims

1. An unducted fan (12) with variable pitch blades for an aeronautical or wind turbine thruster, comprising a hub (16) equipped with housings (35) receiving vanes pivoting about radial axes, and an external casing (24) constituting an aerodynamic fairing for the hub (16), said external casing (24) comprising circular openings (28) through which said housings (35) open and which allow the vanes to be inserted into the hub (16), each vane (20) comprising:
- a root (32) configured to be mounted in rotation about a radial axis (R) in the associated housing (35),
- a generally radially oriented blade (34), and
- a platform (52) substantially in the shape of a disc extending, transversely with respect to the radial direction (R), from said blade (34) to an edge of the circular opening (28) of the associated casing (24), the blade (34) comprising at least one skin (48) comprising an aerodynamic external surface defining a pressure side (48a) and a suction side (48b) of the blade (34), said skin (48) comprising a free lower edge (50) turned towards said root (32),
**characterised in that** the platform (52) is fitted to the free lower edge (50) of the skin (48).

2. The fan (12) according to the preceding claim, **characterised in that** the platform (52) is fitted around the free lower edge on an external surface of the skin.

3. The fan (12) according to claim 1, **characterised in that** the platform (52) is fitted under said free lower edge (50) of the skin (48).

4. The fan (12) according to one of the preceding claims, **characterised in that** the skin (48) is made of woven fibres embedded in a resin and **in that** the platform (52) is glued to the free lower edge (50) of the skin (48).

5. The fan according to the preceding claim, **characterised in that** the platform is embedded in the resin with the blade (34).

6. The fan (12) according to one of claims 4 or 5, **characterised in that** it is a fan (12) for an aeronautical thruster and further comprises:
- a spar (44) connected to the root (32) and extending along the axis (R) inside the blade (34), and
- a foam form (46) ensuring the interface between the spar (44) and the woven fibre skin (48),
and **in that** the platform (52) comprises at least one portion penetrating said foam form (46).

7. The fan (12) according to one of claims 1 to 5, **characterised in that** it is a fan (12) for an aeronautical thruster and comprises:
- an attachment (38) of cylindrical geometry, of radial axis (R), emerging from the lower edge of the blade (34) and capable of maintaining said blade (34) on the associated hub, said attachment (38) comprising a tulip-shaped portion (40), a base (42) of which projects out of the blade (34), and the root (32) of the blade (34), which extends the base (42), and which is capable of being received in a pivoting manner in the associated housing (35) of the hub (16),
- a hollow tubular spar (44), extending along a portion of the blade (34), one end of which is received on the first tulip-shaped portion (40) and is attached thereto by a coiling,
and **in that** the platform (52) is attached to the base (42) of the tulip-shaped portion (40), a first elastomeric sealing joint being arranged between the blade (34) and the platform (52).

8. The fan (12) according to the preceding claim, **characterised in that** the platform (52) is attached to the base (42) of the tulip-shaped portion (40) by means of at least one tab (60) which extends between the base (42) of the tulip-shaped portion (40) and a lower face (62) of the platform (52).

9. The fan (12) according to the preceding claim, **characterised in that** the at least one tab (60) is attached to the base (42) of the tulip-shaped portion (40) by at least one screw (56) and to the lower face (62) of the platform by at least one screw (58).

10. The fan (12) according to one of claims 7 to 9, **characterised in that** the platform (50) is constituted of two half-platforms (52a, 52b) joined in a plane (P) passing through the axis (R) of the vane (34), which are fitted around the free lower edge (50) of the blade (34) and attached to the base (42) of the tulip-shaped portion (40), a second elastomeric sealing joint being arranged between the two half-platforms (52a, 52b).

11. A method for manufacturing a vane (20) for an aeronautical thruster fan (12) according to claim 4, **characterised in that** it comprises at least one first step (ET1) during which a vane blank (20) comprising a skin (48) made of woven fibres is produced, a second step (ET2) during which the vane (20) is deposited in an injection mould, a third step (ET3) during which the platform (52) is moulded with the blade (34) by an RTM resin transfer method, and a fourth step (ET4) during which the platform (52) is glued to the free lower edge (50) of the skin (48),

12. The method for manufacturing a vane (20) for an aeronautical thruster fan (12) according to claim 5, **characterised in that** it comprises at least one first step (ET1) during which a vane blank (20) is produced comprising a skin (48) made of woven fibres, a second step (ET2) during which the platform (52) is glued to the free lower edge (50) of the skin (48), a third step (ET3) during which the vane (20) is deposited in an injection mould, and a fourth step (ET4) during which the platform (52) is moulded with the blade (34) by an RTM resin transfer method.
